# EUROPEAN PATENT SPECIFICATION

(11) **EP 0 783 809 B1**
(45) Date of publication and mention of the grant of the patent: **24.11.1999**
(21) Application number: 95933845.0
(22) Date of filing: 19.09.1995
(51) Int. Cl.: H04B 10/207

(54) **HYBRID FIBER/COAX VIDEO AND TELEPHONY COMMUNICATION SYSTEM**
HYBRIDES FASER-/KOAXIAL KOMMUNIKATIONSSYSTEM FÜR BILD- UND FERNSPRECHSIGNALEN
SYSTEME DE COMMUNICATION VIDEO ET TELEPHONIQUE HYBRIDE PAR FIBRES ET PAR CABLE COAXIAL

(30) Priority: 26.09.1994 US 311964
(43) Date of publication of application: 16.07.1997
(73) Proprietor: ADC TELECOMMUNICATIONS, INC., Minneapolis, MN 55435 (US)
(72) Inventor: ROBERTS, Harold, A., Eden Prairie, MN 55346 (US); NELSON, Calvin, G., Excelsior, MN 55331 (US); RUSSELL, David, S., St. Paul Minnesota 55105 (US); BREDE, Jeffrey, Eden Prairie, MN 55347 (US)
(74) Representative: Beresford, Keith Denis Lewis
(86) International application number: US9511840
(87) International publication number: WO9610303

(56) References cited:
- EP-A- 0 421 602
- EP-A- 0 507 379
- 42ND ANNUAL CONVENTION AND EXPOSITION OF THE NATIONAL CABLE TELEVISION ASSOCIATION, PROCEEDINGS, 6 - 9 June 1993 SAN FRANCISCO, US, pages 358-364, MESIYA 'A passive optical/coax hybrid network architecture for delivery of CATV, telephony and data services'

## Description

### Field of the Invention

The present invention relates generally to the field of communication systems. More particularly, the present invention relates to a bidirectional communications network employing an architecture utilizing both optical fiber and coaxial cable media.

### Background of the Invention

Two information services found in households and businesses today include television or video services and telephone services. Another information service involves digital data transfer which is most frequently accomplished using a modem connected to a telephone service. All further references to telephony herein shall include both telephone services and digital data transfer services.

Characteristics of telephony and video signals are different and therefore telephony and video networks are designed differently as well. For example, telephony information is relatively narrow band when compared to video signals. In addition, telephony signals are low frequency whereas NTSC standard video signals are transmitted at carrier frequencies greater than 50 MHz. Accordingly, telephone transmission networks are relatively narrow band systems which operate at audio frequencies and which typically serve the customer by twisted wire drops from a curb-side junction box. On the other hand, cable television services are broad band and incorporate various frequency carrier mixing methods to achieve signals compatible with conventional very high frequency television receivers. Cable television systems or video services are typically provided by cable television companies through a shielded cable service connection to each individual home or business.

One attempt to combine telephony and video services into a single network is described in U.S. Patent No. 4,977,593 to Balance entitled "Optical Communications Network." Balance describes a passive optical communications network with an optical source located in a central station. The optical source transmits time division multiplexed optical signals along an optical fiber and which signals are later split by a series of splitters between several individual fibers servicing outstations. The network allows digital speech data to be transmitted from the outstations to the central station via the same optical path. In addition, Balance indicates that additional wavelengths could be utilized to add services, such as cable television, via digital multiplex to the network.

A 1988 NCTA technical paper, entitled "Fiber Backbone: A Proposal For an Evolutionary Cable TV Network Architecture," by James A. Chiddix and David M Pangrac, describes a hybrid optical fiber/coaxial cable television (CATV) system architecture. The architecture builds upon existing coaxial CATV networks. The architecture includes the use of a direct optical fiber path from a head end to a number of feed points in an already existing CATV distribution system.

U.S. Patent No. 5,153,763 to Pidgeon, entitled "CATV Distribution Networks Using Light Wave Transmission Lines," describes a CATV network for distribution of broad band, multichannel CATV signals from a head end to a plurality of subscribers. Electrical to optical transmitters at the head end and optical to electrical receivers at a fiber node launch and receive optical signals corresponding to broad band CATV electrical signals. Distribution from the fiber node is obtained by transmitting electrical signals along coaxial cable transmission lines. The system reduces distortion of the transmitted broad band CATV signals by block conversion of all or part of the broad band of CATV signals to a frequency range which is less than an octave. Related U.S. Patent No. 5,262,883 to Pidgeon, entitled "CATV Distribution Networks Using Light Wave Transmission Lines," finther describes the distortion reducing system.

Although the above-mentioned networks describe various concepts for transmitting broad band video signals over various architectures, including hybrid optical fiber/coax architectures, none of these references describes a cost effective, high quality, protectable bi-directional telecommunications network capable of narrow band telephony communications as well as broad band video communications which employ existing telephone and cable television distribution networks. Therefore, a need for such a bi-directional telephony and video communications network, and features for enhancing such a network, currently exists.

European Patent Office Publication No. 0 421 602 A3 describes a hybrid network that provides a range of services for subscribers. The hybrid network is described as providing cordless telephony, broadcast TV, premium TV, data, and hi-fi to subscribers over the network. Similarly, a 1993 technical paper presented at the 42ND ANNUAL CONVENTION AND EXPOSITION OF THE NATIONAL CABLE TELEVISION ASSOCIATION, entitled *A Passive Optical/Coax Hybrid Network Architecture for Delivery of CATV, Telephony and Data Services,* by Dr. M. Farooque Mesiya, describes a passive optical/coax hybrid network.

Although the above-mentioned networks describe various concepts for transmitting broadband video signals over various architectures, and some of the networks also include transmission of telephony signals on the same network, none of the references describes a cost-effective, high quality, protectable bi-directional telecommunications network capable of efficient narrow band telephony communications as well as broad band video communications over a hybrid network. Therefore, a need for such a bi-directional telephony and video communications network, and features for enhancing such a network, currently exists.

### Summary of the Invention

As set out in the appended claims, the present invention provides a video and telephony signal distribution network, an optical/electrical convertor unit, a head end of a video and telephony signal distribution network and a method of transmitting signals in a video and telephony signal distribution network.

The present invention provides a hybrid fiber/coax video and telephony communication network which integrates bi-directional telephony and interactive video services into one network including optical fiber and coaxial cable distribution systems. The network utilizes optical fiber as the transmission medium for feeding a plurality of optical distribution nodes with video and telephony information from a head end. Coaxial cable distribution systems are utilized for connection of the distribution nodes to a plurality of remote units. The head end optically transmits the video information downstream to the nodes where it is converted to electrical signals for distribution to the remote units. Telephony information is also optically transmitted to the nodes in frequency bandwidths unused by the video information. The downstream telephony and video optical signals are converted to electrical telephony and video signals for distribution to the plurality of remote units. The network provides for transmission of upstream electrical data signals, for example telephony signals, to the head end by transmitting from the remote units upstream electrical data signals to the distribution nodes where such upstream electrical data signals are converted to upstream optical signals for transmission to the head end.

In one embodiment, the head end includes a first distribution terminal having at least one optical transmitter for transmitting optical downstream telephony signals on at least one optical fiber. In addition, the head end includes a second distribution terminal having a separate optical transmitter for transmitting an optical downstream video signal on an optical fiber line.

In another embodiment, the video and telephony signal distribution network transmits optical downstream video and telephony signals on at least one optical fiber in a first frequency bandwidth. In this embodiment, a second frequency bandwidth is reused for transmission of upstream electrical data signals generated at the remote units. The second frequency bandwidth is reused for transmission by each remote unit.

In another embodiment of the invention, a filter is utilized at service units which interface the coaxial distribution systems to user equipment. The ingress filter allows for passage of downstream video signals to video equipment units and blocks downstream telephony signals transmitted in a different frequency bandwidth.

### Brief Description of the Drawings

Figure 1 shows a block diagram of a hybrid fiber/coax network in accordance with the present invention.

Figure 2 is a block diagram of a head end host distribution terminal of the network of Figure 1.

Figure 3 is a block diagram of an optical distribution node of the network of Figure 1.

Figure 4 is a block diagram of a home coaxial line unit of the network of Figure 1.

Figure 5 is a block diagram of an alternative embodiment for transmission from the head end to the optical distribution nodes in accordance with the present invention.

Figure 6 is a block diagram of an impulse shaping technique utilized in accordance with the present invention.

Figure 7 is a block diagram of an alternative embodiment of the optical to electrical converter of the head end host distribution terminal of Figure 2.

Figure 8 is a block diagram of an alternative embodiment of the head end host distribution terminal of Figure 2.

### Detailed Description of the Preferred Embodiment

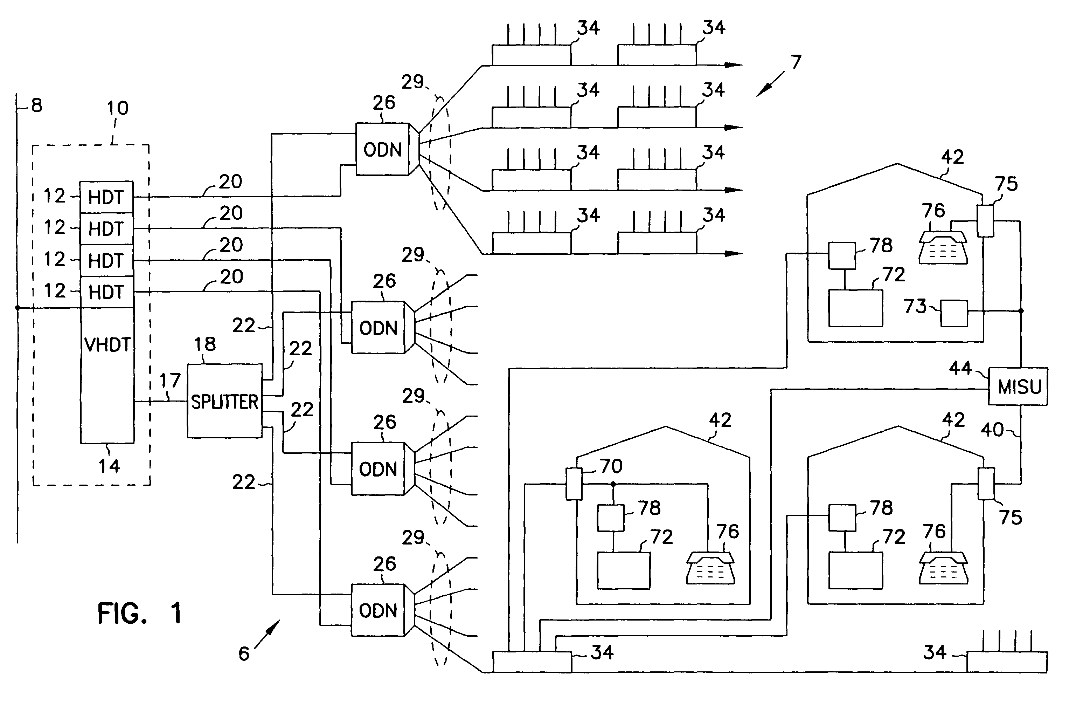

With reference to Fig. 1, a general description of a hybrid fiber/coax communications network 6 in accordance with the present invention shall be described. Telephony and video information from existing telephone and video services generally shown by trunk line 8 is received by and processed by head end 10. Head end 10 includes a plurality of host distribution terminals (HDT) 12 for telephony data interface and video host distribution terminal (VHDT) 14 for video data interface. Host distribution terminals 12 and VHDT 14 include transmitters and receivers for communicating the video and telephony information between the video and telephony signal distribution network 6 in accordance with the present invention and the existing telephony and video services as represented generally by trunk line 8.

The video information is optically transmitted downstream via optical fiber line 17 to splitter 18 which splits the optical video signals for transmission on a plurality of optical fibers 22 to a plurality of optical distribution nodes 26. The HDT 12 transmits optical telephony signals via optical fiber link 20 to the optical distribution nodes 26. The optical distribution nodes 26 convert the optical video signals and telephony signals for transmission as electrical outputs via a coaxial distribution system 7 to a plurality of remote units 42. The electrical downstream video and telephony signals are distributed via a plurality of coaxial lines 29 and coaxial taps 34 of the coaxial distribution system 7.

The remote units 42 include means for transmitting upstream electrical data signals including telephony information from telephones 76 and data terminals 73 and in addition may include means for transmitting set top box information from set top boxes 78. The upstream electrical data signals are provided by a plurality of remote units 42 to an optical distribution node 26 connected thereto. The optical distribution node 26 converts the upstream electrical data signals to an upstream optical data signal for transmission via optical fiber link 20 to the head end 10.

The present invention shall now be described in further detail with reference to Figs. 1-8. The first part of the description shall primarily deal with downstream transmission and the second part of the description shall primarily be with regard to upstream transmission. The video and telephony distribution network 6 in accordance with the present invention, includes head end 10 which receives video and telephony information from video and telephony service providers via trunk line 8. Head end 10 includes a plurality of host distribution terminals 12 and a video host distribution terminal 14. The HDT 12 includes a transmitters and receivers for communicating telephony information, such as T1, ISDN, or other data services information, to and from telephony service providers via trunk line 8 and the VHDT 14 includes a transmitters and receivers for communicating video information, such as cable TV video information and interactive data of subscribers to and from video service providers via trunk line 8.

The VHDT 14 transmits downstream optical signals to a splitter 18 via video feeder optical fiber line 17. The passive optical splitter 18 effectively makes four copies of the downstream high bandwidth optical video signals. The duplicated downstream optical video signals are distributed to the correspondingly connected optical distribution nodes 26. One skilled in the art will readily recognize that although four copies of the downstream video signals are created, that any number of copies may be made by an appropriate splitter and that the present invention is not limited to any specific number.

The splitter 18 is a passive means for splitting broad band optical signals without the need to employ expensive broad band optical to electrical conversion hardware. Optical signal splitters are commonly known to one skilled in the art and available from numerous fiber optic component manufacturers such as Gould, Inc. In the alternative, active splitters may also be utilized. In addition, a cascaded chain of passive or active splitters would further multiply the number of duplicated optical signals for application to an additional number of optical distribution nodes and therefore increase further the remote units serviceable by a single head end. Such alternatives are contemplated in accordance with the present invention as described by the accompanying claims.

The VHDT 14 can be located in a central office, cable TV head end, or a remote site and broadcast up to about 112 NTSC channels. The VHDT 14 includes a transmission system like that of a LiteAMp™ system available from American Lightwave Systems, Inc., currently a subsidiary of the assignee hereof. Video signals are transmitted optically by amplitude modulation of a 1300 nanometer laser source at the same frequency at which the signals are received (i.e. the optical transmission is a terahertz optical carrier which is modulated with the RF video signals). The downstream video transmission bandwidth is about 54-725 MHz. One advantage in using the same frequency for optical transmission of the video signal as the frequency of the video signals when received is to provide high bandwidth transmission with reduced conversion expose. This same-frequency transmission approach means that the modulation downstream requires optical to electrical conversion or proportional conversion with a photodiode and perhaps amplification, but no frequency conversion. In addition, there is no sample data bandwidth reduction and little loss of resolution.

Alternative embodiments of the VHDT may employ other modulation and mixing schemes or techniques to shift the video signals in frequency, and other encoding methods to transmit the information in a coded format. Such techniques and schemes for transmitting analog video data, in addition to those transmitting digital video data, are known to one skilled in the art and are contemplated in accordance with the spirit and scope of the present invention as described in the accompanying claims.

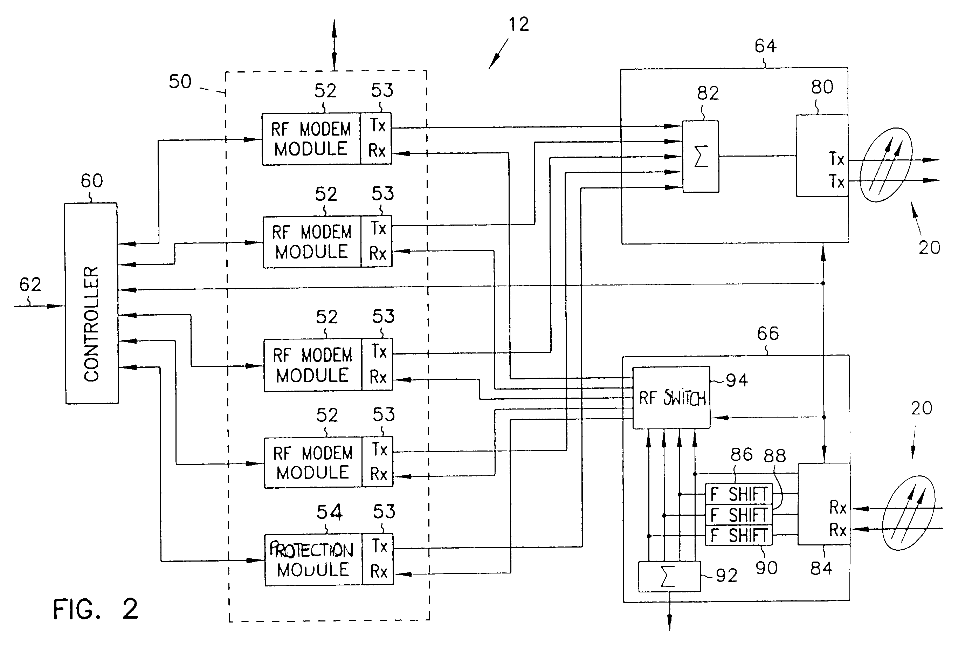

Telephony information is transmitted downstream by HDT 12 via optical fiber link 20 to a corresponding optical distribution node 26. A more detailed block diagram of one of the HDTs 12 is shown in Fig. 2. Each HDT 12 includes an RF modem bank 50 which receives telephony information via trunk line 8. The RF modem bank 50 includes four RF modem modules 52 and a protection modem module 54. Each RF modem module receives telephony information, for example time division multiplexed channel signals from a public switched telephone service, via trunk line 8 and the telephony information modulates an analog carrier for transmission of the downstream optical telephony data by downstream optical telephony transmitter 80 of downstream telephony electrical to optical converter 64 to a corresponding distribution node 26. Each RF modem module includes a transceiver 53 and provides a downstream electrical telephony signal in one of four frequency bandwidths, each bandwidth being about 6 MHz in width like that of a CATV channel. Each 6 MHz bandwidth channel transmits data at 22 Mbits/sec and can provide for transmission of 8T1 digital telephone signals; T1 being a conventional telephone signal where 24 voice channels are sampled at an 8 KHz rate, with 8 bits per sample (each 8 bit conversation sample is termed a DSO). Each of these signals from the four RF modem modules 52 are transmitted via coax patch cables to a combiner 82 of downstream telephony electrical to optical converter 64 for transmission by optical transmitter 80. Therefore, the spectrum for the downstream optical telephony data is four separated 6 MHz frequency bands containing 22 Mbits/sec of data within each 6 MHz bandwidth. The four 6 MHZ frequency bands, separated by a guard band as is known to one skilled in the art, are transmitted in about the 725-800 MHz bandwidth.

Any number of modulation techniques may be used for transmission of the telephony information downstream. The transmission downstream is point to multipoint transmission using broadcast type transmission schemes. The modulation techniques utilized and performed by RF modem module 52 may include quadrature phase shift keying (QPSK), quadrature amplitude modulation (QAM), or other modulation techniques for providing the desired data rate. Modulation techniques, such as QPSK and QAM, are known to those skilled in the art and the present invention contemplates the use of any such modulation techniques for downstream broadcast transmission.

The electrical to optical converter 64 includes two transmitters 80 for downstream telephony transmission to protect the telephony data transmitted. These transmitters are conventional and relatively inexpensive narrow band laser transmitters. One transmitter is in standby if the other is functioning properly. Upon detection of a fault in the operating transmitter, controller 60 switches transmission to the standby transmitter. In contrast, the transmitter of the VHDT 14 is relatively expensive as compared to the transmitters of HDT 12 as it is a broad band analog DFB laser transmitter. Therefore, protection of the video information, non-essential services unlike telephony data, is left unprotected. By splitting the telephony data transmission from the video data transmission, protection for the telephony data alone can be achieved. If the video data information and the telephony data were transmitted over one optical fiber line by an expensive broad band analog laser, economies may dictate that protection for telephony services may not be possible. Therefore, separation of such transmission is of importance.

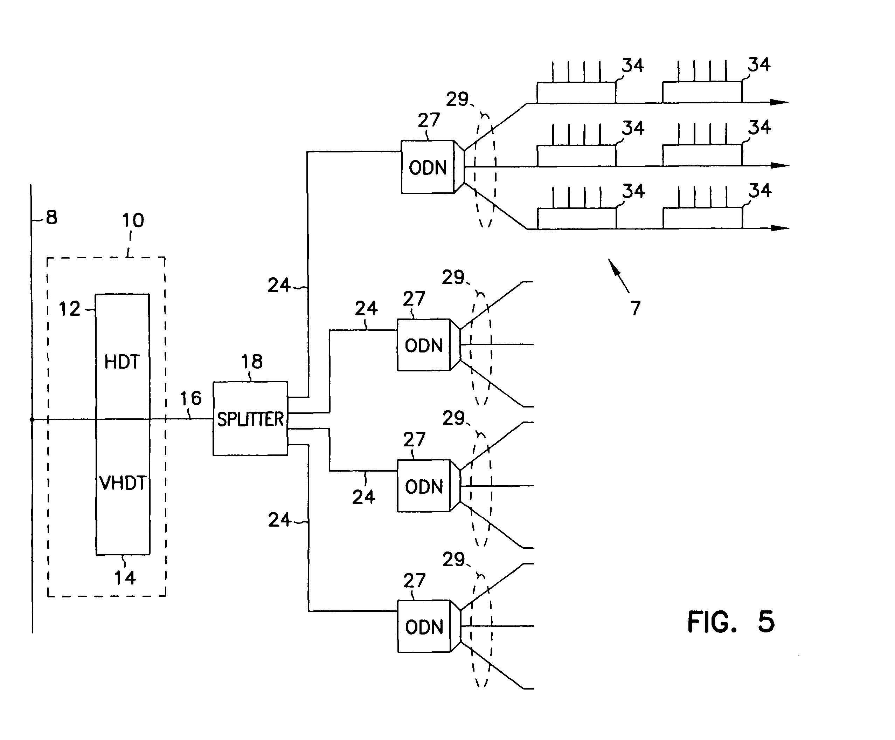

As an alternative embodiment for providing transmission of optical video and telephony signals to the optical distribution nodes 27 from head end 10 as shown in Fig. 5, the HDT 12 and VHDT 14 can utilize the same optical transmitter and the same optical fiber line 16. The signal then is split by splitter 18 and four split signals are provided to the optical distribution nodes 27 for distribution to the remote units 42 by the coaxial distribution system 7 as further discussed below. However, as described above, the optical transmitter utilized would be relatively expensive due to its broad band capabilities, lessening the probabilities of being able to afford protection for essential telephony services.

As one skilled in the art will recognize, optical link 20, as shown in Fig. 2, may include four fibers, two for transmission downstream from electrical to optical converter 64 and two for transmission upstream to optical to electrical converter 66. With the use of directional couplers, the number of such fibers may be cut in half. In addition, the number of protection transmitters and fibers utilized may vary as known to one skilled in the art and any listed number is not limiting to the present invention as described in the accompanying claims.

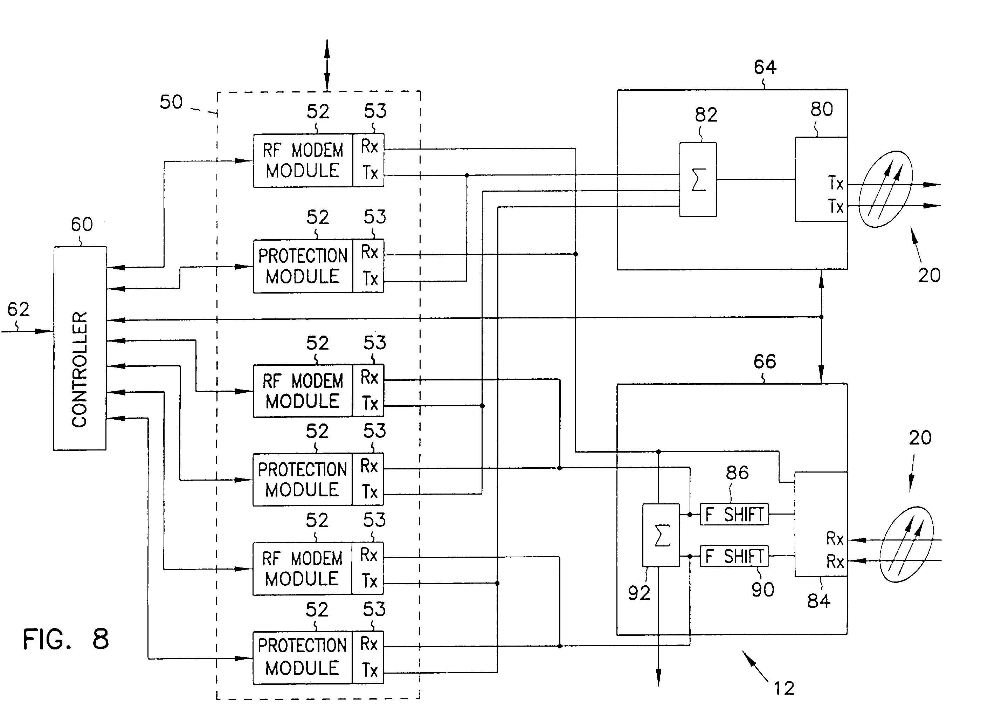

RF modem bank 50 includes a protection RF modem module 54 with a transceiver 53 connected to combiner 82 of electrical to optical converter 64. Protection RF modem module 54 is further coupled to controller 60. When a fault is detected with regard to the transmission of one of the RF modem modules 52, a signal is generated and applied to an input 62 of controller 60. Controller 60 is alerted to the fault and provides appropriate signalling to switch the protection RF modem module 54 for the faulted RF modem such that the protection RF modem module 54 transmits within the 6 MHz bandwidth of the faulted RF modem module 52 so that the four 6 MHz bandwidth signal transmission is continued on optical fiber link 20. The use of one protection RF modem module 54 for four RF modem modules 52 is only one embodiment of the present invention and the number of protection RF modem modules relative to RF modem modules may vary as known to one skilled in the art and described in the accompanying claims. As shown in Figure 8, RF modem bank 50 may include one protection module 54 for each RF modem module 52. In this embodiment, the RF modem bank 50 includes three RF modem modules 52 and three protection modules 54 for one-to-one protection.

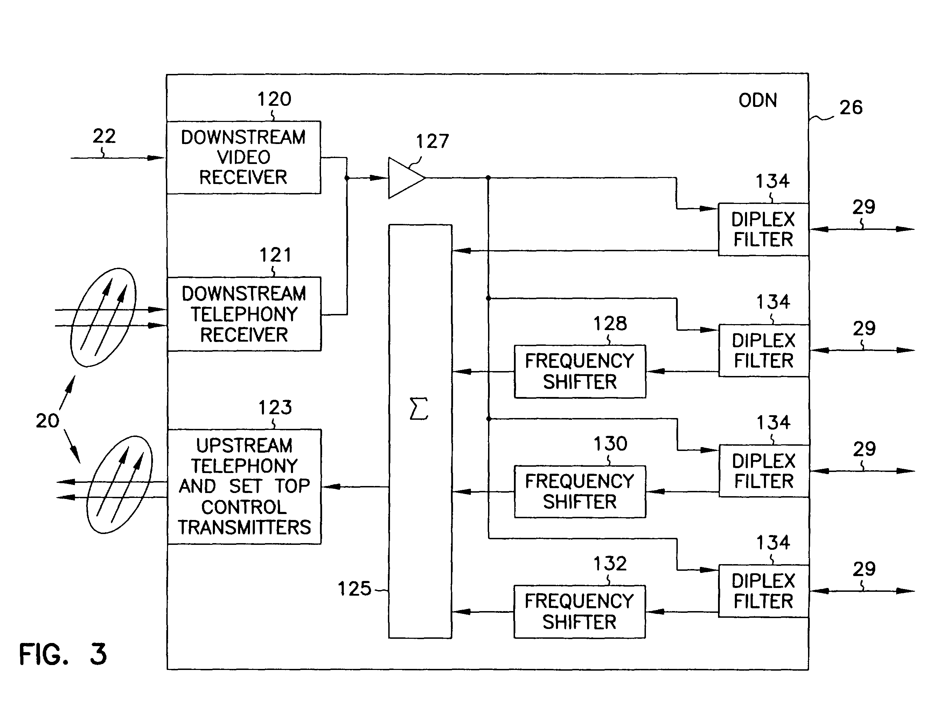

An optical distribution node 26 as shown in Figure 3 receives both the downstream optical telephony signal and the split downstream optical video signal. The downstream optical video signal is applied by the optical fiber 22 from splitter 18 to a downstream video receiver 120 of optical distribution node 26. The optical distribution node 26 further includes downstream telephony receiver 121 for receiving the downstream optical telephony signal on optical link 20. The optical video receiver 120 utilized is like that available in the LiteAMp™ product line available from American Lightwave Systems, Inc. The converted signal from video receiver 120, proportionally converted utilizing photodiodes, is applied to bridger amplifier 127 along with the converted telephony signal from downstream telephony receiver 121. The bridging amplifier 127 simultaneously applies four downstream electrical telephony and video signals to diplex filters 134. The diplex filters 134 allow for full duplex operation by separating the transmit and receive functions when signals of two different frequency bandwidths are utilized for upstream and downstream transmission. There is no frequency conversion performed at the optical distribution nodes with respect to the video or downstream telephony signals as the signals are passed through the optical distribution nodes to the remote units via the coaxial distribution system in the same frequency bandwidth as they are received.

After the optical distribution node 26 has received downstream optical video signals via optical link 22 and downstream optical telephony signals via optical link 20 and such signals are converted to downstream electrical video and telephony signals, the four outputs of the optical distribution nodes 26 are applied to four coaxial cables 29 of coaxial cable distribution system 7 for transmission of the downstream electrical video and telephony signals to the remote units 42; such transmission occurs in about the 725-800 MHz bandwidth for telephony signals and about the 54-725 MHz bandwidth for the downstream electrical video signals. Each optical distribution node 26 provides for the transmission over a plurality of coaxial cables 29 and any number of outputs is contemplated in accordance with the present invention as described in the accompanying claims.

As shown in Fig. 1, each coaxial cable 29 can provide a significant number of remote units with downstream electrical video and telephony signals through a plurality of coaxial taps 34. Coaxial taps are commonly known to one skilled in the art and act as passive bidirectional pick-offs of electrical signals. Each coaxial cable 29 may have a number of coaxial taps connected in series. In addition, the coaxial cable distribution system may use any number of amplifiers to extend the distance data can be sent over the coaxial portions of the network 6.

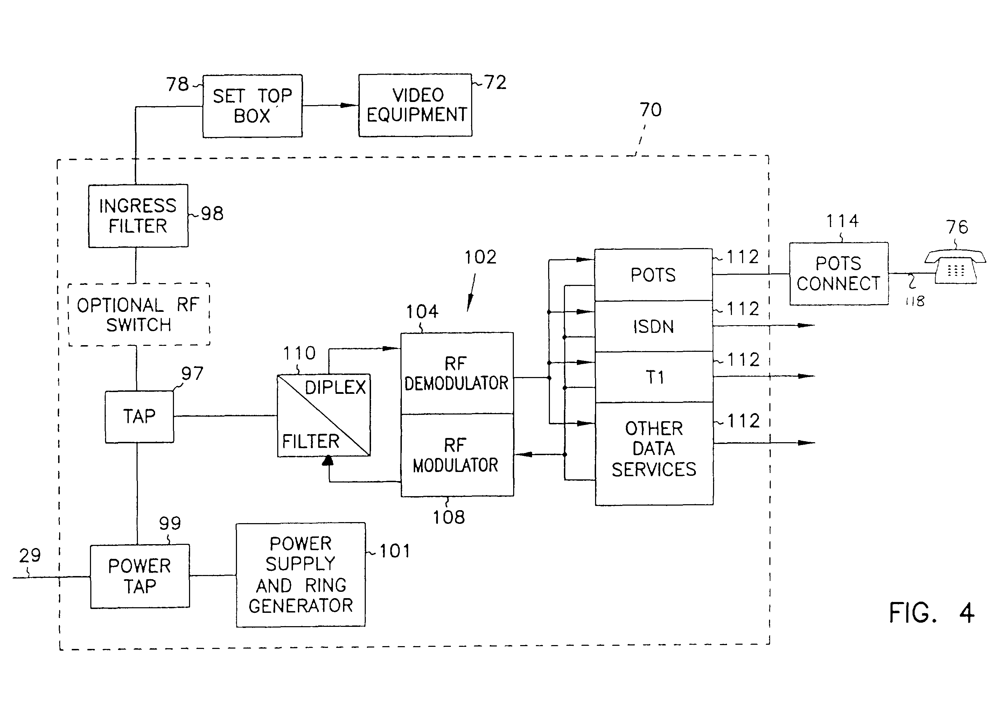

The downstream electrical video and telephony signals are provided from the coaxial taps to the remote units 42 in a number of different ways. In one embodiment, the signal from the coaxial tap 34 is provided to a home integrated service unit 70 as shown in Fig. 4. The home integrated service unit 70 of Fig. 4 includes a power tap 99 coupled to a conventional power supply and ring generator 101. The downstream electrical video and telephony signals are provided to a tap 97 for application of the signals to both diplex filter 110 and ingress filter 98. The downstream video signal is provided from ingress filter 98 to video equipment 72 via set top box 78. The downstream telephony signal is applied from diplex filter 110 to RF demodulator 104 of RF modem module 102 and the demodulated signal is applied to an applicable service interface for processing and connection to user equipment. For example, the RF demodulated signal is processed via Plain Old Telephone Service (POTS) service interface 112 for output on twisted pairs 118 to telephone 76 by POTS connection 114. The other service interfaces such as ISDN interface or a T1 interface perform their conventional functions as are known to those skilled in the art for transmittal of such information on outputs thereof to user equipment.

Ingress filter 98 provides the remote unit 42 with protection against interference of signals applied to the video equipment 72 as opposed to those provided to other user equipment such as telephones or computer terminals. Filter 98 passes the video signals; however, it blocks those frequencies not utilized by the video equipment. By blocking those frequencies not used by the video equipment, stray signals are eliminated that may interfere with the other services provided by the network to at least the same remote unit.

The set top box 78 is an optional element in the network 6. It may include an additional modem for sending interactive data therefrom back to head end 10 at frequencies unused by the video and telephony transmissions. Upstream transmission of such data is further discussed below.

Depending on the modulation processing techniques utilized at the head end 10, the RF demodulator 104 would include circuitry capable of demodulating the modulated signal. For example, if QPSK modulation is utilized then the demodulator would include processing circuitry capable of demodulating a QPSK modulated waveform as is known to one skilled in the art.

In another embodiment of providing downstream electrical video and telephony signals from the coaxial taps 34 to remote units 42, as shown in Fig. 1, a separate coaxial line form coaxial tap 34 is utilized to provide transmission of the signals therefrom to set top box 78, and thus for providing the downstream video signals to video equipment unit 72. In such a case, a second coaxial line from coaxial tap 34 would be utilized to provide the downstream telephony signals to a multiple integrated service unit (MISU) 44 which would be much like the home integrated service unit 70 as described with regard to Fig. 4 except lacking an ingress filter 98 and tap 97. Unlike home integrated service unit 70, the MISU 44 would be utilized to service several remote units 42 with telephony services via various service interfaces. Whether the video and telephony signals are provided to the curb with use of the MISU 44 or whether the video and telephony signals are provided directly to a home integrated service unit is strictly one of application and either can be utilized with regard to the same or different coaxial taps 34 and within the same or different coaxial distribution systems 7.

In addition, an optional network interface device (NID) 75 is utilized in the connection of telephone services to the remote units 42, whether they are homes or businesses. as is known to those skilled in the art and as shown in Fig. 1. The NID is generally shown by block 75 representing the home integrated service unit but is not shown in the detail of Fig. 4. The NID performs service functions for the telephone service provider such as looping back signals to the service provider that reach the NID so as to indicate whether a failure has occurred somewhere in transmission to the NID or in connections from the NID to the user equipment when a failure is reported to the service provider.

The above description primarily involves the downstream transmission of video and telephony information from head end 10 to remote units 42. The upstream transmission of interactive data from set top boxes 78 and other data, for example telephony from telephones 76, shall now be described with reference to Figs. 1-8. The description shall be limited to transmission from remote units via home integrated service units as transmission from an MISU is substantially similar and easily ascertainable from such description. Home integrated service unit 70 provides set top box information from set top box 78 and telephony information from the service interfaces 112. including information from telephone 76, to the optical distribution node 26 connected thereto by the same coaxial path as for the downstream communication. The set top box signals are transmitted by a separate RF modem of the video service provider at a relatively low frequency in the bandwidth of about 5 to 40 MHz which is unused by telephony and video services. The telephony signals are also transmitted upstream in the 5-40 MHz bandwidth usually from 10 MHz to 30 MHz. This 5-40 MHz bandwidth is reused in each coaxial path 29 from each remote unit 42 to the respectively connected optical distribution node 26. As such, upstream electrical telephony data signals from the remote units are transmitted at the same reused frequency bandwidth of 5-40 MHz on each coaxial line 29 for input to the optical distribution node 26. Therefore, as shown in Fig. 3, four upstream electrical telephony signals, each in the 5-40 MHz bandwidth, are input to optical distribution node 26, via the respectively connected coaxial cables 29.

The upstream transmission from an integrated service unit for multipoint to point transmission utilizes time multiplexing techniques, although any of a number of multiple access techniques known to those skilled in the art are contemplated in accordance with the present invention. All the remote units are designated a time slot for transmission. In such a case each remote unit must transmit at a particular time to maintain multiple access with the timing being supplied using data on the downstream paths. The upstream data is transmitted on a bit-by-bit basis. With each remote unit assigned a time slot, the RF modem 102 of the unit knows that it will not interfere with the others because it has determined the time delay for each one of them and each RF modem 102 is signalled to transmit at a precise time. Due to the high volumes of multiplexed serial data from several outlining remote stations and limited bandwidth for transmission, short pulse durations are required for better resolution of the data transmitted to the head end 10. Although the data modulates a carrier and is transmitted in the 5 to 40 MHz bandwidth by RF modulator 108, because of the limited bandwidth in the upstream direction, a pulse shaping network at each remote unit is used to generate raised cosine pulses for the rectangular or square wave bit-by-bit stream of data transmitted along the coaxial cable in the coaxial network.

An optimal pulse shape for transmission in a band limited coaxial cable network is determined by the use of Fourier calculations with a given set of boundary conditions. Also, the Fourier calculations implement a spectral limitation constraint for the purposes of limiting the spectral content of the optimal pulse shape. Limiting the spectral content of the pulse shape serves two functions. The first function is to limit the spectral characteristics of the optimal pulse shape in order to prevent phase dispersion at the receiving end of the transmission system. The second benefit from the spectral limitation constraint is to allow the use of relatively simple finite impulse response filters with a minimal number of taps.

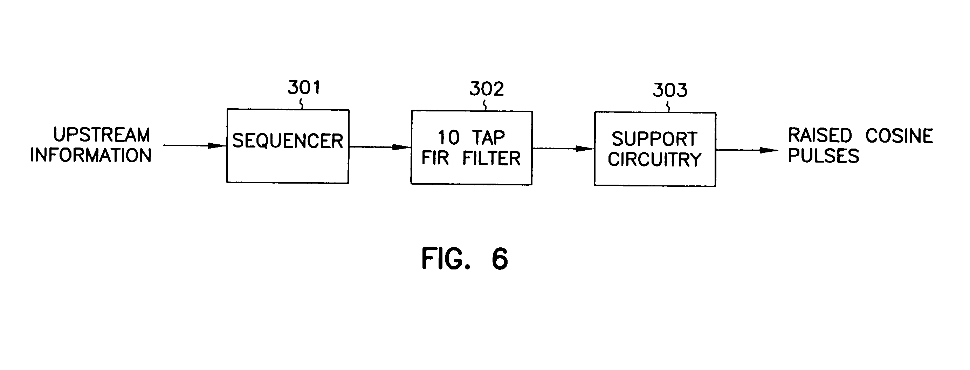

In one embodiment of the pulse shaping network as shown in Fig. 6, 50 nanosecond pulses from the RF modulator 108 of RF modem 102 are transmitted to a pulse sequencer 301 for uniform digitization. The output from the pulse sequencer is then applied to a ten tapped finite impulse response filter (FIR filter) 302 with associated electronics 303 to provide the addition and subtraction necessary for the filtering process. The output is sent to a line driver circuit for output to the coaxial cable through diplex filter 110. The optimal pulse waveform is a raised cosine waveform. Using such pulse shaping techniques, overcomes the difficulty of sending extremely short pulse duration information along a band limited coaxial cable.

The upstream electrical telephony signals from a plurality of remote units, including signals from the RF modems 102 and from modems in set top boxes 78, are transmitted to the respectively connected optical distribution node 26 as shown in Fig. 3 via the individual coaxial cables 29. The upstream electrical signals are applied to a diplex filter 134 respectively connected to a coaxial cable 29. One of the diplex filters 134 passes the upstream electrical telephony signal applied thereto through to combiner 125 while the other diplex filters pass the upstream electrical telephony signals applied thereto to frequency shifters 128, 130, and 132. Frequency shifter 128 shifts the upstream electrical telephony signal into the 50-85 MHz bandwidth, frequency shifter 130 shifts another upstream electrical telephony signal into the 100-135 MHz bandwidth and frequency shifter 132 shifts the other upstream electrical telephony signal into the 150-185 MHz bandwidth. The shifted signals are combined by combiner 125 and provided to upstream telephony and set top control transmitters 123. The conventional optical transmitters 123 transmit the upstream electrical telephony signal as an upstream optical telephony signal to head end 10 via fiber optic link 20. Once again, two transmitters are available for transmission, one in standby mode, like that in the downstream transmission path.

The upstream optical telephony signals are received by upstream telephony and set top box receiver 84 of optical to electrical converter block 66. The upstream optical telephony signals are converted, split, and all the split electrical signals in the 540 MHz, 50-85 MHz, 100-135 MHz, and 150-185 MHz are frequency shifted back to the 5-40 MHz bandwidth by frequency shifters 86, 88, and 90 with the exception of the signal already in the 540 MHz bandwidth which is passed through with the other frequency shifted signals from the frequency shifters to RF switch 94. A combined signal in the 540 MHz bandwidth from combiner 92 is provided to the VHDT and the signal is processed for obtaining the interactive information transmitted from set top boxes 78. The RF switch 94 is controlled by controller 60 and provides the upstream telephony signals to the transceivers 53 of the corresponding RF modems 52. The upstream telephony signals are then demodulated by RF modem modules 52 and the telephony data is provided to the service providers via trunk line 8. The RF modem modules 52 include RF demodulator corresponding to the modulation techniques utilized to transmit the information upstream so such information can be recovered.

As discussed previously, the controller 60 switches protection RF modem module 54 for a transmitting RF modem module 52 in the downstream communication when a fault is detected in that module. The controller also provides signaling for switching the RF switch 94 such that the information which would have been provided to the faulted RF modem module 52 is applied to the transceiver of the protection RF modem module 54. Therefore, the protection modem module 54 is then fully within the transmit and receive loop of the system.

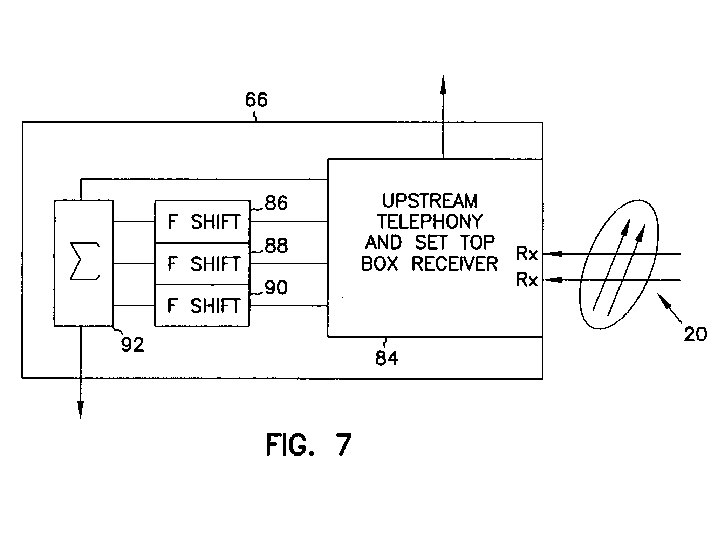

As shown in Fig. 7, an alternative embodiment of the present invention includes an optical to electrical converter 66 wherein the received optical upstream telephony signal is converted by receivers 84 and the entire upstream electrical signal in the 5-200 MHz bandwidths is applied to the transceivers 53 of the RF modem modules 52. The RF modem modules 52 are then operated under control of controller 60 which assigns the RF modem module a carrier frequency to tune to for the recovery of telephony information; the assigned frequency being a function of the frequency shifting of the upstream signal. The electrical signal is still separated and frequency shifted by frequency shifters 86, 88 and 90 except for the signal already in the 5-40 MHz bandwidth and then combined by combiner 92 for application to VHDT 14.

In this embodiment, the switching of the protection modem module 54 into the system is accomplished through the controller 60. When the controller 60 detects and indicates a faulted modem module 52, the controller 60 assigns the frequency previously assigned to the faulted RF modem module to the protection module, thus establishing the protection RF modem module 54 fully within the transmit and receive loop.

In another embodiment shown in Fig. 8 including one-to-one protection for the RF modem module, neither the RF switch used for protection switching for the configuration of Fig. 2 nor the additional control required for protection switching for the configuration of Fig. 7 is necessary. In this embodiment, the same electrical signal provided to the RF modem modules 52 is applied to the corresponding protection module 54, thus only a control signal indicating which module is to be used for transmission or reception is required for the one-to-one protection.

It is to be understood, however, that even though numerous characteristics of the present invention have been set forth in the foregoing description, together with details of the structure and function of the invention, the disclosure is illustrative and changes in matters of shape, size, number, and arrangement of the elements may be made within the principles of the invention and to the full extent indicated by the broad general meaning of the terms in which the appending claims are expressed.

## Claims

1. A video and telephony signal distribution network (6), comprising:
a head end (10) having means (80) for transmitting downstream optical video and telephony signals on at least one optical fibre (20, 22; 16) in a first frequency bandwidth, and means (84) for receiving upstream optical data signals;
an optical/electrical convertor unit (26; 27) having means (120, 121) for receiving and converting said downstream optical video and telephony signals from said at least one optical fibre into corresponding downstream electrical data signals, means (134) for outputting said corresponding downstream electrical data signals and for receiving upstream electrical data signals, and means (123) for converting said received upstream electrical data signals into corresponding upstream optical data signals and for transmitting the corresponding upstream optical data signals to said head end (10); and
a coaxial distribution system (29) connected to said outputting and receiving means (134), and being operable for distributing said downstream electrical data signals output from said outputting and receiving means (134) to at least one service unit (44; 70) which is connected to at least one remote unit (42), and for transmitting, to said outputting and receiving means (134), upstream electrical data signals received from said at least one service unit (44; 70) in a second frequency bandwidth different from said first frequency bandwidth;
characterised in that:
said optical/electrical convertor unit (26; 27) comprises a plurality of outputting and receiving means (134), each for outputting said corresponding downstream electrical data signals and for receiving upstream electrical data signals;
a plurality of said coaxial distribution systems (29) are provided, each connected to a respective one of said outputting and receiving means; and in that
said optical/electrical convertor unit (26; 27) further comprises frequency shift means (128, 130, 132) for shifting the frequency bandwidth of the upstream electrical data signals received at at least one of said plurality of outputting and receiving means (134) so that the respective upstream electrical data signals lie within different frequency bandwidths, and combining means (125) for combining the frequency shifted upstream electrical data signals for transmittal to said head end (10) as said upstream optical data signals in a predetermined frequency bandwidth.

2. The network according to claim 1, wherein said transmitting means (80) of said head end (10) is operable to transmit said downstream optical video and telephony data signals on different optical fibres (20, 22).

3. The network according to claim 2, wherein said receiving means (84) of said head end (10) is operable to receive said upstream optical data signals from an optical fibre different to the optical fibres used to transmit said downstream optical video and telephony data signals.

4. The network according to claim 2 or 3, wherein separate receiving and converting means (120, 121) are provided in said optical/electrical convertor unit (26) for converting the respective downstream optical video and downstream optical telephony data signals into corresponding downstream electrical data signals, and wherein said optical/electrical convertor unit (26) is operable to combine the corresponding downstream electrical video and telephony data signals prior to outputting them to said coaxial distribution systems (29).

5. The network according to any preceding claim, wherein the head end (10) further comprises a plurality of modem modules (52), each comprising a modulator for modulating downstream telephony information in a different frequency bandwidth within said first frequency bandwidth to produce downstream telephony data signals; and a demodulator for demodulating received upstream data signals.

6. The network according to any preceding claim, wherein said receiving means (84) of said head end (10) is operable to convert said upstream optical data signals into corresponding upstream electrical data signals and to split the upstream electrical data signals so as to separate the upstream electrical data signals received from the plurality of coaxial distribution systems (29), and wherein said head end (10) further comprises frequency shift means (86, 88, 90) for shifting the frequency bandwidth of the received upstream electrical data signals back to said second frequency bandwidth.

7. The network according to claim 6 when dependent upon claim 5, wherein said head end (10) further comprises switch means (94) for providing a respective one of said split upstream data signals to the demodulator of a respective one of said plurality of modem modules (52).

8. The network according to claims 5 or 6 when dependent upon claim 5, wherein each demodulator is operable to receive the entire upstream electrical data signals and wherein said head end (10) further comprises a controller (60) for assigning a carrier frequency for each modem module (52) in dependence upon the frequency shifts applied to the respective upstream data signals by said optical/electrical convertor unit (26), so that each demodulator is operable to demodulate a respective one of the upstream data signals from the coaxial distribution systems (29).

9. The network according to claim 5 or any claim dependent thereon, wherein said head end (10) further comprises at least one protection module (54) and a controller (60) for controlling substitution of said at least one protection module (54) for one of said modem modules (52) when a fault is detected with said one of said modem modules (52).

10. The network according to any preceding claim, wherein at least one of said service units (70, 44) comprises a multiple user service unit (44) for providing telephony information to a certain plurality of said remote units (42).

11. The network according to claim 10, wherein downstream video data signals are supplied via a separate coaxial line to any of said certain plurality of remote units (42).

12. The network according to any preceding claim, wherein said combining means (125) is operable to combine the frequency shifted signals for transmittal to said head end in a predetermined bandwidth which includes said second frequency bandwidth.

13. An optical/electrical convertor unit (26, 27), comprising:
means (120, 121) for receiving and converting downstream optical video and telephony data signals in a first frequency bandwidth from at least one optical fibre (20, 22; 16) into corresponding downstream electrical data signals;
means (134) for outputting said corresponding downstream electrical data signals to a coaxial distribution system (29) and for receiving upstream electrical data signals in a second frequency bandwidth different from said first frequency bandwidth from said coaxial distribution system; and
means (123) for converting said received upstream electrical data signals into corresponding upstream optical data signals and for transmitting said corresponding upstream optical data signals;
characterised in that:
a plurality of outputting and receiving means (134) are provided, each for outputting said corresponding downstream electrical data signals to a respective coaxial distribution system (29) and for receiving upstream electrical data signals in said second frequency bandwidth from the respective coaxial distribution system (29);
frequency shift means (128, 130, 132) is provided for shifting the frequency bandwidth of the upstream electrical data signals received at at least one of said plurality of outputting and receiving means (134) so that the respective upstream electrical data signals lie within different frequency bandwidths; and in that
combining means (125) is provided for combining the frequency shifted upstream electrical data signals for transmittal as said upstream optical data signals in a predetermined frequency bandwidth.

14. The optical/electrical convertor unit according to claim 13, comprising separate receiving and converting means (120, 121) for converting the respective downstream optical video and downstream optical telephony data signals into corresponding downstream electrical data signals, and wherein said optical/electrical converter unit (26) is operable to combine the corresponding downstream electrical video and telephony data signals prior to outputting them to said coaxial distribution systems (29).

15. The optical/electrical convertor unit according to claim 13 or 14, wherein said combining means (125) is operable to combine the frequency shifted signals for transmittal to said head end in a predetermined bandwidth which includes said second frequency bandwidth.

16. A head end (10) of a video and telephony signal distribution network (6), comprising:
means (80) for transmitting downstream optical video and telephony signals on at least one optical fibre (20, 22; 16) in a first frequency bandwidth; and
means (84) for receiving upstream optical data signals in a second frequency bandwidth and for converting the received upstream optical data signals into corresponding upstream electrical data signals;
characterised in that said receiving and converting means (84) is operable to receive upstream data signals having a plurality of upstream data signal components, each of which lies within a different respective frequency bandwidth within said second frequency bandwidth, and to split the upstream data signals into its respective upstream data signal components, and in that said head end (10) further comprises frequency shift means (86, 88, 90) for shifting the frequency bandwidth of said upstream data signal components so that the plurality of upstream data signal components lie within the same frequency bandwidth.

17. The head end (10) according to claim 16, wherein said transmitting means (80) is operable to transmit said downstream optical video and telephony data signals on different optical fibres (20, 22).

18. The head end (10) according to claim 17, wherein said receiving means (84) is operable to receive said upstream optical data signals from an optical fibre different to the optical fibres used to transmit said downstream optical video and telephony data signals.

19. The head end (10) according to any of claims 16 to 18, further comprising a plurality of modem modules (52), each comprising a modulator for modulating downstream telephony information in a different frequency bandwidth within said first frequency bandwidth to produce downstream telephony data signals; and a demodulator for demodulating received upstream data signals.

20. The head end (10) according to claim 19, further comprising switch means (94) for providing a respective one of said upstream data signal components to the demodulator of a respective one of said plurality of modem modules (52).

21. The head end (10) according to claim 20, wherein each demodulator is operable to receive the entire upstream electrical data signals, and further comprising a controller (60) for assigning a carrier frequency for each modem module (52) in dependence upon the different respective frequency bandwidths within which said plurality of upstream data signal components lie, so that each demodulator is operable to demodulate a respective one of the upstream data signal components.

22. The head end (10) according to any of claims 19 to 21, further comprising at least one protection module (54) and a controller (60) for controlling substitution of said at least one protection module for one of said modem modules when a fault is detected with said one of said modem modules (52).

23. A method of transmitting signals in a video and telephony signal distribution network (6), the method comprising the steps of:
transmitting downstream optical video and telephony signals on at least one optical fibre (20, 22; 16) in a first frequency bandwidth from a head end (10);
receiving and converting the transmitted downstream optical video and telephony signals into corresponding downstream electrical data signals in an optical/electrical convertor unit (26; 27);
using an outputting and receiving means (134) of said optical/electrical convertor unit (26; 27) to output said corresponding downstream electrical data signals;
using a coaxial distribution system (29), which is connected to said outputting and receiving means (134), for distributing said downstream electrical data output from said outputting and receiving means (134) to at least one service unit (44, 70) which is connected to at least one remote unit (92) and transmitting, to said outputting and receiving means (134), upstream electrical data signals from said service unit (44, 70) in a second frequency bandwidth different from said first frequency bandwidth;
receiving said transmitted upstream electrical data signals at said outputting and receiving means (134);
converting said received upstream electrical data signals into corresponding upstream optical data signals;
transmitting the corresponding upstream optical data signals from said optical/electrical convertor unit (26; 27) to said head end (10); and
receiving the upstream optical data at said head end (10) from said optical/electrical convertor unit (26; 27);
characterised by:
providing a plurality of outputting and receiving means (134) in said optical/electrical convertor unit (26; 27);
providing a plurality of coaxial distribution systems (29), each connected to a respective one of said outputting and receiving means;
at said optical/electrical convertor unit (26; 27), outputting said downstream electrical data signals to and receiving electrical upstream data signals at each of said at least two outputting and receiving means (134); and
at said optical/electrical convertor unit (26; 27) shifting the frequency bandwidth of the upstream electrical data signals received at at least one of said plurality of outputting and receiving means (134) so that the respective upstream electrical data signals lie within different frequency bandwidths, and combining the frequency shifted upstream electrical data signals for transmittal to said head end (10) as said upstream optical data signals in a predetermined frequency bandwidth.

24. The method according to claim 23, wherein said transmitting step at said head end (10) transmits said downstream optical video and telephony data signals on different optical fibres (20, 22).

25. The method according to claim 24, wherein said step of receiving the upstream optical data at said head end (10) receives the data from an optical fibre different to the optical fibres used to transmit said optical downstream video and telephony data signals.

26. The method according to claim 24 or 25, wherein said downstream optical video and telephony data signals are received separately and converted separately into corresponding downstream electrical data signals and wherein the method further comprises the step of combining the corresponding downstream electrical video and telephony data signals in said optical/electrical convertor unit (26) prior to being output to said outputting and receiving means (134).

27. The method according to any of claims 23 to 26, further comprising the steps of using a plurality of modem modules (52) within said head end (10), each modem module modulating downstream telephony information in a separate frequency bandwidth within said first frequency bandwidth to produce downstream telephony data signals and each modem module demodulating received upstream data signals.

28. The method according to any of claims 23 to 27, wherein said head end (10) converts the received upstream optical data signals into corresponding upstream electrical data signals and splits the upstream electrical data signals so as to separate the upstream electrical data signals received from the plurality of coaxial distribution systems (29), and wherein the head end (10) further performs the step of shifting the frequency bandwidth of the upstream electrical data signals which had their frequency bandwidth shifted in said optical/electrical convertor unit (26), back to said second frequency bandwidth.

29. The method according to claim 28 when dependent upon claim 27, wherein said head end (10) provides a respective one of said split upstream data signals to the demodulator of a respective one of said at least two modem modules (52).

30. The method according to claim 27 or 28 when dependent upon claim 27, further comprising the step of passing the entire received upstream electrical data signals to each demodulator, and wherein said head end (10) performs the step of assigning a carrier frequency for each modem module in dependence upon the frequency shifts applied to the respective upstream data signals by said optical/electrical convertor unit (26), so that each demodulator demodulates a respective one of the upstream data signals from said plurality of coaxial distribution systems (29).

31. The method according to claim 27 or any claim dependent thereon, wherein said head end (10) comprises at least one protection module (54) and a controller (60) and wherein the method further comprises the step of substituting said at least one protection module (54) for one of said modem modules (52) when a fault is detected with said one of said modem modules (52).

32. The method according to any of claims 23 to 31 wherein at least one of said service units comprises a multiple user service unit (44) and wherein the method further comprises the step of providing telephony information to a certain plurality of said remote units (42) using said multiple user service unit (44).

33. The method according to claim 32, further comprising the step of supplying downstream video data signals to any of said certain plurality of remote units via a separate coaxial line.

34. The method according to any of claims 23 to 33, wherein said predetermined bandwidth includes said second frequency bandwidth.

## Patentansprüche

1. Video- und Fernsprechsignal-Verteilungsnetz (6) mit:
einem Kopfende (10), das Einrichtungen (80) zur Übertragung optischer Netzabwärtsvideo- und Fernsprechsignale auf mindestens einem Lichtleitfaser (20, 22; 16) in einer ersten Frequenzbandbreite und Einrichtungen (84) zum Empfangen optischer Netzaufwärtsdatensignale aufweist;
einer Optisch-Elektrisch-Wandlereinheit (26; 27), die aufweist: Einrichtungen (120, 121) zum Empfangen und Umwandeln der optischen Netzabwärtsvideo- und Fernsprechsignale aus der mindestens einen Lichtleitfaser in entsprechende elektrische Netzabwärtsdatensignale, Einrichtungen (134) zum Ausgeben der entsprechenden elektrischen Netzabwärtsdatensignale und zum Empfangen elektrischer Netzaufwärtsdatensignale, und Einrichtungen (123) zum Umwandeln der empfangenen elektrischen Netzaufwärtsdatensignale in entsprechende optische Netzaufwärtsdatensignale und zur Übertragung der entsprechenden optischen Netzaufwärtsdatensignale an das Kopfende (10); und
einem Koaxialverteilungssystem (29), das mit den Ausgabeund Empfangseinrichtungen (134) verbunden ist und betriebsfähig ist zum Verteilen der elektrischen Netzabwärtsdatensignale, die aus den Ausgabe- und Empfangseinrichtungen (134) ausgegeben werden, an mindestens eine Diensteinheit (44; 70), die mit mindestens einer Ferneinheit (42) verbunden ist, und zur Übertragung an die Ausgabe- und Empfangseinrichtungen (134) elektrischer Netzaufwärtsdatensignale, die von der mindestens einen Diensteinheit (44; 70) in einer zweiten Frequenzbandbreite empfangen werden, die sich von der ersten Frequenzbandbreite unterscheidet;
dadurch gekennzeichnet, daß:
die Optisch-Elektrisch-Wandlereinheit (26; 27) mehrere Ausgabe- und Empfangseinrichtungen (134) aufweist, die jeweils zum Ausgeben der entsprechenden elektrischen Netzabwärtsdatensignale und zum Empfangen elektrischer Netzaufwärtsdatensignale dienen;
mehrere der Koaxialverteilungssysteme (29) vorgesehen sind, die jeweils mit einer jeweiligen der Ausgabe- und Empfangseinrichtungen verbunden sind; und daß
die Optisch-Elektrisch-Wandlereinheit (26; 27) ferner Frequenzverschiebungseinrichtungen (128, 130, 132) aufweist zum Verschieben der Frequenzbandbreite der elektrischen Netzaufwärtsdatensignale, die an mindestens einer der mehreren Ausgabe- und Empfangseinrichtungen (134) empfangen werden, so daß die jeweiligen elektrischen Netzaufwärtsdatensignale innerhalb unterschiedlicher Frequenzbandbreiten liegen, und
Kombinationseinrichtungen (125) zum Kombinieren der frequenzverschobenen elektrischen Netzaufwärtsdatensignale zur Übertragung an das Kopfende (10) als die optischen Netzaufwärtsdatensignale in einer vorherbestimmten Frequenzbandbreite

2. Netz nach Anspruch 1, wobei die Übertragungseinrichtungen (80) des Kopfendes (10) betriebsfähig sind, die optischen Netzabwärtsvideo- und Fernsprechdatensignale auf unterschiedlichen Lichtleitfasern (20, 22) zu übertragen.

3. Netz nach Anspruch 2, wobei die Empfangseinrichtungen (84) des Kopfendes (10) betriebsfähig sind, die optischen Netzaufwärtsdatensignale von einer Lichtleitfaser zu empfangen, die sich von den Lichtleitfasern unterscheidet, die verwendet werden, um die optischen Netzabwärtsvideo- und Fernsprechdatensignale zu übertragen.

4. Netz nach Anspruch 2 oder 3, wobei getrennte Empfangs- und Umwandlungseinrichtungen (120, 121) in der Optisch-Elektrisch-Wandlereinheit (26) vorgesehen sind zum Umwandeln der jeweiligen optischen Netzabwärtsvideo- und optischen Netzabwärtsfernsprechdatensignale in entsprechende elektrische Netzabwärtsdatensignale, und wobei die Optisch-Elektrisch-Wandlereinheit (26) betriebsfähig ist, die entsprechenden elektrischen Netzabwärtsvideo- und Fernsprechdatensignale zu kombinieren, bevor sie an die Koaxialverteilungssysteme (29) ausgegeben werden.

5. Netz nach einem der vorhergehenden Ansprüche, wobei das Kopfende (10) ferner mehrere Modemmodule (52) aufweist, die jeweils einen Modulator zum Modulieren einer Netzabwärtsfernsprechinformation in einer unterschiedlichen Frequenzbandbreite innerhalb der ersten Frequenzbandbreite, um Netzabwärtsfernsprechdatensignale zu erzeugen; und einen Demodulator zum Demodulieren empfangener Netzaufwärtsdatensignale aufweisen.

6. Netz nach einem der vorhergehenden Ansprüche, wobei die Empfangseinrichtungen (84) des Kopfendes (10) betriebsfähig sind, die optischen Netzaufwärtsdatensignale in entsprechende elektrische Netzaufwärtsdatensignale umzuwandeln und die elektrischen Netzaufwärtsdatensignale aufzuteilen, um die elektrischen Netzaufwärtsdatensignale zu trennen, die von den mehreren Koaxialverteilungssystemen (29) empfangen werden, und wobei das Kopfende (10) ferner Frequenzverschiebungseinrichtungen (86, 88, 90) aufweist zum Verschieben der Frequenzbandbreite der empfangenen elektrischen Netzaufwärtsdatensignale zurück zur zweiten Frequenzbandbreite.

7. Netz nach Anspruch 6, wenn von Anspruch 5 abhängig, wobei das Kopfende (10) ferner Schalteinrichtungen (94) zum Liefern eines jeweiligen der aufgeteilten Netzaufwärtsdatensignale an den Demodulator eines jeweiligen der mehreren Modemmodule (52) aufweist.

8. Netz nach einem Ansprüche 5 oder 6, wenn von Anspruch 5 abhängig, wobei jeder Demodulator betriebsfähig ist, die gesamten elektrischen Netzaufwärtsdatensignale zu empfangen, und wobei das Kopfende (10) ferner eine Steuervorrichtung (60) aufweist zum Zuweisen einer Trägerfrequenz für jedes Modemmodul (52) in Abhängigkeit von den Frequenzverschiebungen, die auf die jeweiligen Netzaufwärtsdatensignale durch die Optisch-Elektrisch-Wandlereinheit (26) angewendet werden, so daß jeder Demodulator betriebsfähig ist, ein jeweiliges der Netzaufwärtsdatensignale von den Koaxialverteilungssystemen (29) zu demodulieren.

9. Netz nach Anspruch 5 oder jedem davon abhängigen Anspruch, wobei das Kopfende (10) ferner mindestens ein Schutzmodul (54) und eine Steuervorrichtung (60) aufweist zur Steuerung der ersatzweisen Verwendung des mindestens einen Schutzmoduls (54) für eines der Modemmodule (52), wenn ein Defekt bei einem der Modemmodule (52) festgestellt wird.

10. Netz nach einem der vorhergehenden Ansprüche, wobei mindestens eine der Diensteinheiten (70, 44) eine Mehrbenutzerdiensteinheit (44) aufweist zum Liefern einer Fernsprechinformation an eine bestimmte Mehrzahl der Ferneinheiten (42).

11. Netz nach Anspruch 10, wobei Netzabwärtsvideodatensignale über eine getrennte Koaxialleitung an jede der bestimmten Mehrzahl von Ferneinheiten (42) geliefert werden.

12. Netz nach einem der vorhergehenden Ansprüche, wobei die Kombinationseinrichtungen (125) betriebsfähig sind, die frequenzverschobenen Signale zur Übertragung an das Kopfende in einer vorherbestimmten Bandbreite zu kombinieren, die die zweite Frequenzbandbreite aufweist.

13. Optisch-Elektrisch-Wandlereinheit (26, 27) mit:
Einrichtungen (120, 121) zum Empfangen und Umwandeln optischer Netzabwärtsvideo- und Fernsprechdatensignale in einer ersten Frequenzbandbreite von mindestens einer Lichtleitfaser (20, 22; 16) in entsprechende elektrische Netzabwärtsdatensignale;
Einrichtungen (134) zum Ausgeben der entsprechenden elektrischen Netzabwärtsdatensignale an ein Koaxialverteilungssystem (29) und zum Empfangen von elektrischen Netzaufwärtsdatensignalen in einer zweiten Frequenzbandbreite, die sich von der ersten Frequenzbandbreite aus dem Koaxialverteilungssystem unterscheidet; und
Einrichtungen (123) zum Umwandeln der empfangenen elektrischen Netzaufwärtsdatensignale in entsprechende optische Netzaufwärtsdatensignale und zur Übertragung der entsprechenden optischen Netzaufwärtsdatensignale;
dadurch gekennzeichnet, daß:
mehrere Ausgabe- und Empfangseinrichtungen (134) vorgesehen sind, jeweils zum Ausgeben der entsprechenden elektrischen Netzabwärtsdatensignale an ein jeweiliges Koaxialverteilungssystem (29) und zum Empfangen von elektrischen Netzaufwärtsdatensignalen in der zweiten Frequenzbandbreite vom jeweiligen Koaxialverteilungssystem (29);
Frequenzverschiebungseinrichtungen (128, 130, 132) vorgesehen sind zum Verschieben der Frequenzbandbreite der elektrischen Netzaufwärtsdatensignale, die an mindestens einer der mehreren Ausgabe- und Empfangseinrichtungen (134) empfangen werden, so daß die jeweiligen elektrischen Netzaufwärtsdatensignale innerhalb verschiedener Frequenzbandbreiten liegen; und daß
Kombinationseinrichtungen (125) vorgesehen sind zum Kombinieren der frequenzverschobenen elektrischen Netzaufwärtsdatensignale zur Übertragung als die optischen Netzaufwärtsdatensignale in einer vorherbestimmten Frequenzbandbreite.

14. Optisch-Elektrisch-Wandlereinheit nach Anspruch 13, die getrennte Empfangs- und Umwandlungseinrichtungen (120, 121) aufweist zum Umwandeln der jeweiligen optischen Netzabwärtsvideo- und optischen Netzabwärtsfernsprechdatensignale in entsprechende elektrische Netzabwärtsdatensignale, und wobei die Optisch-Elektrisch-Wandlereinheit (26) betriebsfähig ist, die entsprechenden elektrischen Netzabwärtsvideo- und Fernsprechdatensignale zu kombinieren, bevor sie an die Koaxialverteilungssysteme (29) ausgegeben werden.

15. Optisch -Elektrisch-Wandlereinheit nach Anspruch 13 oder 14, wobei die Kombinationseinrichtungen (125) betriebsfähig sind, um die frequenzverschobenen Signale zur Übertragung an das Kopfende in einer vorherbestimmten Bandbreite zu kombinieren, die die zweite Frequenzbandbreite aufweist.

16. Kopfende (10) eines Video- und Fernsprechsignal-Verteilungsnetzes (6) mit:
Einrichtungen (80) zur Übertragung optischer Netzabwärtsvideo- und Fernsprechsignale an mindestens eine Lichtleitfaser (20, 22; 16) in einer ersten Frequenzbandbreite; und
Einrichtungen (84) zum Empfangen optischer Netzaufwärtsdatensignale in einer zweiten Frequenzbandbreite und zum Umwandeln der empfangenen optischen Netzaufwärtsdatensignale in entsprechende elektrische Netzaufwärtsdatensignale;
dadurch gekennzeichnet, daß
die Empfangs- und Umwandlungseinrichtungen (84) betriebsfähig sind, Netzaufwärtsdatensignale zu empfangen, die mehrere Netzaufwärtsdatensignalkomponenten aufweisen, von denen jedes innerhalb einer anderen jeweiligen Frequenzbandbreite innerhalb der zweiten Frequenzbandbreite liegt, und um die Netzaufwärtsdatensignale in ihre jeweiligen Netzaufwärtsdatensignalkomponenten aufzuteilen, und daß das Kopfende (10) ferner Frequenzverschiebungseinrichtungen (86, 88, 90) zum Verschieben der Frequenzbandbreite der Netzaufwärtsdatensignalkomponenten aufweist, so daß die mehreren Netzaufwärtsdatensignalkomponenten innerhalb derselben Frequenzbandbreite liegen.

17. Kopfende (10) nach Anspruch 16, wobei die Übertragungseinrichtungen (80) betriebsfähig sind, die optischen Video-und Fernsprechnetzabwärtsdatensignale auf unterschiedlichen Lichtleitfasern (20, 22) zu übertragen.

18. Kopfende (10) nach Anspruch 17, wobei die Empfangseinrichtungen (84) betriebsfähig sind, die optischen Netzaufwärtsdatensignale von einer Lichtleitfaser zu empfangen, die sich von den Lichtleitfasern unterscheidet, die verwendet werden, um die optischen Video- und Fernsprechnetzabwärtsdatensignale zu übertragen.

19. Kopfende (10) nach einem der Ansprüche 16 bis 18, das ferner mehrere Modemmodule (52) aufweist, die jeweils einen Modulator zum Modulieren einer Netzabwärtsfernsprechinformation in einer anderen Frequenzbandbreite innerhalb der ersten Frequenzbandbreite, um Netzabwärtsfernsprechdatensignale zu erzeugen; und einen Demodulator zum Demodulieren der empfangenen Netzaufwärtsdatensignale aufweisen.

20. Kopfende (10) nach Anspruch 19, das ferner Schalteinrichtungen (94) aufweist zum Liefern einer jeweiligen der Netzaufwärtsdatensignalkomponenten an den Demodulator eines jeweiligen der mehreren Modemmodule (52).

21. Kopfende (10) nach Anspruch 20, wobei jeder Demodulator betriebsfähig ist, die gesamten elektrischen Netzaufwärtsdatensignale zu empfangen, und ferner eine Steuervorrichtung (60) aufweist zum Zuweisen einer Trägerfrequenz für jedes Modemmodul (52) in Abhängigkeit von unterschiedlichen jeweiligen Frequenzbandbreiten, innerhalb welcher die mehreren Netzaufwärtsdatensignalkomponenten liegen, so daß jeder Demodulator betriebsfähig ist, eine jeweilige der Netzaufwärtsdatensignalkomponenten zu demodulieren.

22. Kopfende (10) nach einem der Ansprüche 19 bis 21, das ferner mindestens ein Schutzmodul (54) und eine Steuervorrichtung (60) aufweist zur Steuerung der ersatzweisen Verwendung des mindestens einen Schutzmoduls (54) für eines der Modemmodule (52), wenn ein Defekt bei einem der Modemmodule (52) festgestellt wird.

23. Verfahren zur Übertragung von Signalen in einem Video- und Fernsprechsignal-Verteilungsnetz (6), wobei das Verfahren die Schritte aufweist:
Übertragen optischer Netzabwärtsvideo- und Fernsprechsignale an mindestens eine Lichtleitfaser (20, 22; 16) in einer ersten Frequenzbandbreite von einem Kopfende (10);
Empfangen und Umwandeln der übertragenen optischen Netzabwärtsvideo- und Fernsprechsignale in entsprechende elektrische Netzabwärtsdatensignale in einer Optisch-Elektrisch-Wandlereinheit (26; 27);
Verwenden von Ausgabe- und Empfangseinrichtungen (134) der Optisch-Elektrisch-Wandlereinheit (26; 27), um die entsprechenden elektrischen Netzabwärtsdatensignale auszugeben;
Verwenden eines Koaxialverteilungssystems (29), das mit den Ausgabe- und Empfangseinrichtungen (134) verbunden ist, zum Verteilen der elektrischen Netzabwärtsdaten, die von den Ausgabe- und Empfangseinrichtungen (134) an mindestens eine Diensteinbeit (44, 70) ausgegeben werden, die mit mindestens einer Ferneinheit (92) verbunden ist, und Übetragen an die Ausgabe- und Empfangseinrichtungen (134) elektrischer Netzaufwärtsdatensignale von der Diensteinheit (44, 70) in einer zweiten Frequenzbandbreite, die sich von der ersten Frequenzbandbreite unterscheidet;
Empfangen der übertragenen elektrischen Netzaufwärtsdatensignale an der Ausgabe- und Empfangseinrichtung (134);
Umwandeln der empfangenen elektrischen Netzaufwärtsdatensignale in entsprechende optische Netzaufwärtsdatensignale;
Übertragen der entsprechenden optischen Netzaufwärtsdatensignale von der Optisch-Elektrisch-Wandlereinheit (26; 27) an das Kopfende (10); und
Empfangen der optischen Netzaufwärtsdaten am Kopfende (10) von der Optisch-Elektrisch-Wandlereinheit (26; 27);
gekennzeichnet durch:
Bereitstellen mehrerer Ausgabe- und Empfangseinrichtungen (134) in der Optisch-Elektrisch-Wandlereinheit (26; 27);
Bereitstellen mehrerer Koaxialverteilungssysteme (29), die jeweils mit einer jeweiligen der Ausgabe- und Empfangseinrichtungen verbunden sind;
an der Optisch-Elektrisch-Wandlereinheit (26; 27) Ausgeben der elektrischen Netzabwärtsdatensignale an und Empfangen elektrischer Netzaufwärtsdatensignale an jeder der mindestens zwei Ausgabe- und Empfangseinrichtungen (134); und
an der Optisch-Elektrisch-Wandlereinheit (26; 27) Verschieben der Frequenzbandbreite der elektrischen Netzaufwärtsdatensignale, die an mindestens einer der mehreren Ausgabe-und Empfangseinrichtungen (134) empfangen werden, so daß die jeweiligen elektrischen Netzaufwärtsdatensignale innerhalb unterschiedlicher Frequenzbandbreiten liegen, und Kombinieren der frequenzverschobenen elektrischen Netzaufwärtsdatensignale zur Übertragung an das Kopfende (10) als die optischen Netzaufwärtsdatensignale in einer vorherbestimmten Frequenzbandbreite.

24. Verfahren nach Anspruch 23, wobei der Übertragungsschritt am Kopfende (10) die optischen Netzabwärtsvideo- und Fernsprechdatensignale auf unterschiedlichen Lichtleitfasern (20, 22) überträgt.

25. Verfahren nach Anspruch 24, wobei der Schritt des Empfangs der optischen Netzaufwärtsdaten am Kopfende (10) die Daten von einer Lichtleitfaser empfängt, die sich von den Lichtleitfasern unterscheidet, die verwendet werden, um die optischen Netzabwärtsvideo- und Fernsprechdatensignale zu übertragen.

26. Verfahren nach Anspruch 24 oder 25, wobei die optischen Netzabwärtsvideo- und Fernsprechdatensignale getrennt empfangen und getrennt in entsprechende elektrische Netzabwärtsdatensignale umgewandelt werden und wobei das Verfahren ferner den Schritt aufweist: Kombinieren der entsprechenden elektrischen Netzabwärtsvideo- und Fernsprechdatensignale in der Optisch-Elektrisch-Wandlereinheit (26) bevor sie an die Ausgabe- und Empfangseinrichtungen (134) ausgegeben werden.

27. Verfahren nach einem der Ansprüche 23 bis 26, das ferner die Schritte aufweist: Verwenden mehrerer Modemmodule (52) im Kopfende (10), wobei jedes Modemmodul eine Netzabwärtsfernsprechinformation in einer getrennten Frequenzbandbreite innerhalb der ersten Frequenzbandbreite moduliert, um Netzabwärtsfernsprechdatensignale zu erzeugen, und jedes Modemmodul empfangene Netzaufwärtsdatensignale demoduliert.

28. Verfahren nach einem der Ansprüche 23 bis 27, wobei das Kopfende (10) die empfangenen optischen Netzaufwärtsdatensignale in entsprechende elektrische Netzaufwärtsdatensignale umwandelt und die elektrischen Netzaufwärtsdatensignale aufteilt, um die elektrischen Netzaufwärtsdatensignale zu trennen, die von den mehreren Koaxialverteilungssystemen (29) empfangen werden, und wobei das Kopfende (10) ferner den Schritt ausführt: Verschieben der Frequenzbandbreite der elektrischen Netzaufwärtsdatensignale, deren Frequenzbandbreite in der Optisch-Elektrisch-Wandlereinheit (26) verschoben wurde, zurück auf die zweite Frequenzbandbreite.

29. Verfahren nach Anspruch 28, wenn von Anspruch 27 abhängig, wobei das Kopfende (10) ferner Schalteinrichtungen (94) zum Liefern eines jeweiligen der aufgeteilten Netzaufwärtsdatensignale an den Demodulator eines jeweiligen der mehreren Modemmodule (52) aufweist.

30. Verfahren nach Anspruch 27 oder 28, wenn von Anspruch 27 abhängig, das ferner den Schritt aufweist: Schicken der gesamten empfangenen elektrischen Netzaufwärtsdatensignale an jeden Demodulator, und wobei jedes Kopfende (10) den Schritt ausführt: Zuweisen einer Trägerfrequenz für jedes Modemmodul in Abhängigkeit von den Frequenzverschiebungen, die auf die jeweiligen Netzaufwärtsdatensignale durch die Optisch-Elektrisch-Wandlereinheit (26) angewendet werden, so daß jeder Demodulator ein jeweiliges der Netzaufwärtsdatensignale von den mehreren Koaxialverteilungssystemen (29) demoduliert.

31. Verfahren nach Anspruch 27 oder jedem davon abhängigen Anspruch, wobei das Kopfende (10) mindestens ein Schutzmodul (54) und eine Steuervorrichtung (60) aufweist, und wobei das Verfahren ferner den Schritt aufweist: ersatzweises Anwenden des mindestens einen Schutzmoduls (54) für eines der Modemmodule (52), wenn ein Defekt bei einem der Modemmodule (52) festgestellt wird.

32. Verfahren nach einem der Ansprüche 23 bis 31, wobei mindestens eine der Diensteinheiten eine Mehrbenutzerdiensteinheit (44) aufweist und wobei das Verfahren ferner den schritt aufweist: Liefern einer Fernsprechinformation an eine bestimmte Mehrzahl der Ferneinheiten (42) unter Verwendung der Mehrbenutzerdiensteinheit (44).

33. Verfahren nach Anspruch 32, das ferner den Schritt aufweist: Liefern von Netzabwärtsvideodatensignalen an jede der bestimmten Mehrzahl von Ferneinheiten über eine getrennte Koaxialleitung.

34. Verfahren nach einem der Ansprüche 23 bis 33, wobei die vorherbestimmte Bandbreite die zweite Frequenzbandbreite aufweist.

## Revendications

1. Réseau de distribution de signaux vidéo et téléphoniques (6), comprenant:
une tête de réseau (10) avec des moyens (80) pour transmettre des signaux vidéo et téléphoniques optiques aval sur au moins une fibre optique (20, 22; 16) dans une première largeur de bande, et des moyens (84) pour recevoir des signaux de données optiques amont;
une unité de conversion optique/ électrique (26; 27) avec des moyens (120, 121) pour recevoir et convertir lesdits signaux vidéo et téléphoniques optiques aval provenant de ladite au moins une fibre optique en signaux de données électriques aval correspondants, des moyens (134) pour sortir lesdits signaux de données électriques aval correspondants et pour recevoir des signaux de données électriques amont, et des moyens (123) pour convertir lesdits signaux de données électriques amont reçus en signaux de données optiques amont correspondants et pour transmettre les signaux de données optiques amont correspondants à ladite tête de réseau (10); et
un système de distribution par câble coaxial (29) connecté auxdits moyens de sortie et de réception (134), et étant opérationnel pour distribuer lesdits signaux de données électriques aval sortis par lesdits moyens de sortie et de réception (134) à au moins une unité de service (44; 70) qui est connectée à au moins une unité distante (42), et pour transmettre, auxdits moyens de sortie et de réception (134), des signaux de données électriques amont reçus de ladite au moins une unité de service (44: 70) dans une deuxième largeur de bande différente de ladite première largeur de bande;
caractérisé en ce que:
ladite unité de conversion optique/ électrique (26; 27) comprend une pluralité de moyens de sortie et de réception (134), chacun pour sortir lesdits signaux de données électriques aval correspondants et pour recevoir des signaux de données électriques amont;
une pluralité desdits systèmes de distribution par câble coaxial (29) est prévue, chacun connecté à un moyen respectif parmi lesdits moyens de sortie et de réception; et en ce que
ladite unité de conversion optique/ électrique (26; 27) comprend en outre des moyens de décalage de fréquence (128, 130, 132) pour décaler la largeur de bande des signaux de données électriques amont reçus à au moins un moyen parmi ladite pluralité de moyens de sortie et de réception (134) de sorte que les signaux de données électriques amont respectifs se trouvent à l'intérieur de différentes largeurs de bande, et des moyens de combinaison (125) pour combiner les signaux de données électriques amont décalés en fréquence pour les transmettre à ladite tête de réseau (10) comme lesdits signaux de données optiques amont dans une largeur de bande prédéterminée.

2. Réseau selon la revendication 1, dans lequel lesdits moyens de transmission (80) de ladite tête de réseau (10) sont opérationnels pour transmettre lesdits signaux de données vidéo et téléphoniques optiques aval sur différentes fibres optiques (20, 22).

3. Réseau selon la revendication 2, dans lequel lesdits moyens de réception (84) de ladite tête de réseau (10) sont opérationnels pour recevoir lesdits signaux de données optiques amont provenant d'une fibre optique différente des fibres optiques utilisées pour transmettre lesdits signaux de données vidéo et téléphoniques optiques aval.

4. Réseau selon la revendication 2 ou 3, dans lequel des moyens séparés de réception et de conversion (120, 121) sont prévus dans ladite unité de conversion optique/ électrique (26) pour convertir les signaux respectifs de données vidéo optiques aval et de données téléphoniques optiques aval en signaux de données électriques aval correspondants, et dans lequel ladite unité de conversion optique/ électrique (26) est opérationnelle pour combiner les signaux de données vidéo et téléphoniques électriques aval correspondants avant de les débiter auxdits systèmes de distribution par câble coaxial (29).

5. Réseau selon l'une quelconque des revendications précédentes, dans lequel la tête de réseau (10) comprend en outre une pluralité de modules de modem (52), chacun comprenant un modulateur pour moduler des informations téléphoniques aval dans une différente largeur de bande à l'intérieur de ladite première largeur de bande pour produire des signaux de données téléphoniques aval; et un démodulateur pour démoduler des signaux de données amont reçus.

6. Réseau selon l'une quelconque des revendications précédentes, dans lequel lesdits moyens de réception (84) de ladite tête de réseau (10) sont opérationnels pour convertir lesdits signaux de données optiques amont en signaux de données électriques amont correspondants et pour diviser les signaux de données électriques amont de façon à séparer les signaux de données électriques amont reçus de la pluralité de systèmes de distribution par câble coaxial (29), et dans lequel ladite tête de réseau (10) comprend en outre des moyens de décalage de fréquence (86, 88, 90) pour décaler la largeur de bande des signaux de données électriques amont reçus de nouveau à ladite deuxième largeur de bande.

7. Réseau selon la revendication 6 dans la mesure où elle dépend de la revendication 5, dans lequel ladite tête de réseau (10) comprend en outre des moyens de commutation (94) pour fournir un signal respectif parmi lesdits signaux de données amont divisés au démodulateur d'un module respectif de ladite pluralité de modules de modem (52).

8. Réseau selon les revendications 5 ou 6 dans la mesure où elles dépendent de la revendication 5, dans lequel chaque démodulateur est opérationnel pour recevoir tous les signaux de données électriques amont, et dans lequel ladite tête de réseau (10) comprend en outre un contrôleur (60) pour affecter une fréquence de porteuse pour chaque module de modem (52) en fonction des décalages de fréquence appliqués aux signaux de données amont respectifs par ladite unité de conversion optique/ électrique (26), de sorte que chaque démodulateur est opérationnel pour démoduler un signal respectif parmi les signaux de données amont provenant des systèmes de distribution par câble coaxial (29).

9. Réseau selon la revendication 5 ou selon l'une quelconque des revendications dépendant de celle-ci, dans lequel ladite tête de réseau (10) comprend en outre au moins un module de protection (54) et un contrôleur (60) pour contrôler la substitution dudit au moins un module de protection (54) pour l'un desdits modules de modem (52) quand une défaillance est détectée dans ledit un module parmi lesdits modules de modem (52).

10. Réseau selon l'une quelconque des revendications précédentes, dans lequel au moins l'une desdites unités de service (70, 44) comprend une unité de service multi-utilisateur (44) pour fournir des informations téléphoniques à une certaine pluralité desdites unités distantes (42).

11. Réseau selon la revendication 10, dans lequel des signaux de données vidéo aval sont fournis par l'intermédiaire d'une ligne coaxiale séparée à une unité quelconque parmi ladite certaine pluralité d'unités distantes (42).

12. Réseau selon l'une quelconque des revendications précédentes, dans lequel lesdits moyens de combinaison (125) sont opérationnels pour combiner les signaux décalés en fréquence pour les transmettre à ladite tête de réseau dans une largeur de bande prédéterminée qui inclut ladite deuxième largeur de bande.

13. Unité de conversion optique/ électrique (26, 27), comprenant:
des moyens (120, 121) pour recevoir et convertir des signaux de données vidéo et téléphoniques optiques aval dans une première largeur de bande provenant d'au moins une fibre optique (20, 22; 16) en signaux de données électriques aval correspondants;
des moyens (134) pour débiter lesdits signaux de données électriques aval correspondants à un système de distribution par câble coaxial (29) et pour recevoir des signaux de données électriques amont dans une deuxième largeur de bande différente de ladite première largeur de bande provenant dudit système de distribution par câble coaxial; et
des moyens (123) pour convertir lesdits signaux de données électriques amont reçus en signaux de données optiques amont correspondants et pour transmettre lesdits signaux de données optiques amont correspondants;
caractérisée en ce que:
une pluralité de moyens de sortie et de réception (134) est prévue, chacun pour débiter lesdits signaux de données électriques aval correspondants à un système de distribution par câble coaxial respectif (29) et pour recevoir des signaux de données électriques amont dans ladite deuxième largeur de bande provenant du système de distribution par câble coaxial respectif (29);
des moyens de décalage de fréquence (128, 130, 132) sont prévus pour décaler la largeur de bande des signaux de données électriques amont reçus à au moins un moyen parmi ladite pluralité de moyens de sortie et de réception (134) de sorte que les signaux de données électriques amont respectifs se trouvent à l'intérieur de différentes largeurs de bande; et en ce que
des moyens de combinaison (125) sont prévus pour combiner les signaux de données électriques amont décalés en fréquence pour les transmettre comme lesdits signaux de données optiques amont dans une largeur de bande prédéterminée.

14. Unité de conversion optique/ électrique selon la revendication 13, comprenant des moyens séparés de réception et de conversion (120, 121) pour convertir les signaux respectifs de données vidéo optiques aval et de données téléphoniques optiques aval en signaux de données électriques aval correspondants. et dans laquelle ladite unité de conversion optique/électrique (26) est opérationnelle pour combiner les signaux de données vidéo et téléphoniques électriques aval correspondants avant de les débiter auxdits systèmes de distribution par câble coaxial (29).

15. Unité de conversion optique/ électrique selon la revendication 13 ou 14, dans laquelle lesdits moyens de combinaison (125) sont opérationnels pour combiner les signaux décalés en fréquence pour les transmettre à ladite tête de réseau dans une largeur de bande prédéterminée qui inclut ladite deuxième largeur de bande.

16. Tête de réseau (10) d'un réseau de distribution de signaux vidéo et téléphoniques (6), comprenant:
des moyens (80) pour transmettre des signaux vidéo et téléphoniques optiques aval sur au moins une fibre optique (20, 22: 16) dans une première largeur de bande; et
des moyens (84) pour recevoir des signaux de données optiques amont dans une deuxième largeur de bande et pour convertir les signaux de données optiques amont reçus en signaux de données électriques amont correspondants;
caractérisée en ce que lesdits moyens de réception et de conversion (84) sont opérationnels pour recevoir des signaux de données amont présentant une pluralité de composantes de signaux de données amont, dont chacune se trouve à l'intérieur d'une largeur de bande respective différente à l'intérieur de ladite deuxième largeur de bande, et pour diviser les signaux de données amont en leurs composantes de signaux de données amont respectives, et en ce que ladite tête de réseau (10) comprend en outre des moyens de décalage de fréquence (86, 88, 90) pour décaler la largeur de bande desdites composantes de signaux de données amont de sorte que la pluralité de composantes de signaux de données amont se trouve à l'intérieur de la même largeur de bande.

17. Tête de réseau (10) selon la revendication 16. dans laquelle lesdits moyens de transmission (80) sont opérationnels pour transmettre lesdits signaux de données vidéo et téléphoniques optiques aval sur des fibres optiques (20, 22) différentes.

18. Tête de réseau (10) selon la revendication 17. dans laquelle lesdits moyens de réception (X4) sont opérationnels pour recevoir lesdits signaux de données optiques amont provenant d'une fibre optique différente aux fibres optiques utilisées pour transmettre lesdits signaux de données vidéo et téléphoniques optiques aval.

19. Tête de réseau (10) selon l'une quelconque des revendications 16 à 18, comprenant en outre une pluralité de modules de modem (52), chacun comprenant un modulateur pour moduler des informations téléphoniques aval dans une largeur de bande différente à l'intérieur de ladite première largeur de bande pour produire des signaux de données téléphoniques aval; et un démodulateur pour démoduler des signaux de données amont reçus.

20. Tête de réseau (10) selon la revendication 19, comprenant en outre des moyens de commutation (94) pour fournir une composante respective desdites composantes de signaux de données amont au démodulateur d'un module respectif parmi ladite pluralité de modules de modem (52).

21. Tête de réseau (10) selon la revendication 20, dans laquelle chaque démodulateur est opérationnel pour recevoir tous les signaux de données électriques amont, et comprenant en outre un contrôleur (60) pour affecter une fréquence de porteuse pour chaque module de modem (52) en fonction des différentes largeurs de bande respectives à l'intérieur desquelles se trouve ladite pluralité de composantes de signaux de données amont, de sorte que chaque démodulateur est opérationnel pour démoduler une composante respective parmi les composantes de signaux de données amont.

22. Tête de réseau (10) selon l'une quelconque des revendications 19 à 21, comprenant en outre au moins un module de protection (54) et un contrôleur (60) pour contrôler la substitution dudit au moins un module de protection à l'un desdits modules de modem quand une défaillance est détectée pour ledit un module parmi lesdits modules de modem (52).

23. Procédé de transmission de signaux dans un réseau de distribution de signaux vidéo et téléphoniques (6), le procédé comprenant les étapes consistant à:
transmettre des signaux vidéo et téléphoniques optiques aval sur au moins une fibre optique (20, 22; 16) dans une première largeur de bande à partir d'une tête de réseau (10);
recevoir et convertir les signaux vidéo et téléphoniques optiques aval transmis en signaux de données électriques aval correspondants dans une unité de conversion optique/ électrique (26; 27);
utiliser des moyens de sortie et de réception (134) de ladite unité de conversion optique/ électrique (26; 27) pour sortir lesdits signaux de données électriques aval correspondants;
utiliser un système de distribution par câble coaxial (29), qui est connecté auxdits moyens de sortie et de réception (134), pour distribuer lesdites données électriques aval débitées par lesdits moyens de sortie et de réception (134) à au moins une unité de service (44, 70), qui est connectée à au moins une unité distante (92), et transmettre, auxdits moyens de sortie et de réception (134), des signaux de données électriques amont provenant de ladite unité de service (44, 70) dans une deuxième largeur de bande différente de ladite première largeur de bande;
recevoir lesdits signaux de données électriques amont transmis auxdits moyens de sortie et de réception (134);
convertir lesdits signaux de données électriques amont reçus en signaux de données optiques amont correspondants;
transmettre les signaux de données optiques amont correspondants provenant de ladite unité de conversion optique/ électrique (26; 27) à ladite tête de réseau (10); et
recevoir les données optiques amont à ladite tête de réseau (10) de ladite unité de conversion optique/électrique (26; 27);
caractérisé par:
la fourniture d'une pluralité de moyens de sortie et de réception (134) dans ladite unité de conversion optique/électrique (26; 27);
la fourniture d'une pluralité de systèmes de distribution par câble coaxial (29), chacun connecté à un moyen respectif parmi lesdits moyens de sortie et de réception;
à ladite unité de conversion optique/électrique (26; 27), débiter lesdits signaux de données électriques aval à destination de, et recevoir des signaux de données amont électriques à chacun desdits au moins deux moyens de sortie et de réception (134); et
à ladite unité de conversion optique/électrique (26; 27) décaler la largeur de bande des signaux de données électriques amont reçus à au moins l'un de ladite pluralité de moyens de sortie et de réception (134) de sorte que les signaux de données électriques amont respectifs se trouvent à l'intérieur de différentes largeurs de bande. et combiner les signaux de données électriques amont décalés en fréquences pour les transmettre à ladite tête de réseau (10) comme lesdits signaux de données optiques amont dans une largeur de bande prédéterminée.

24. Procédé selon la revendication 23, dans lequel ladite étape de transmission à ladite tête de réseau (10) transmet lesdits signaux de données vidéo et téléphoniques optiques aval sur des fibres optiques (20, 22) différentes.

25. Procédé selon la revendication 24, dans lequel ladite étape de réception des données optiques amont à ladite tête de réseau (10) reçoit les données d'une fibre optique différente des fibres optiques utilisées pour transmettre lesdits signaux de données vidéo et téléphoniques aval optiques.

26. Procédé selon la revendication 24 ou 25, dans lequel lesdits signaux de données vidéo et téléphoniques optiques aval sont reçus séparément et convertis séparément en signaux de données électriques aval correspondants. et dans lequel le procédé comprend en outre l'étape consistant à combiner les signaux de données vidéo et téléphoniques électriques aval correspondants dans ladite unité de conversion optique/ électrique (26) avant qu'ils ne soient débités auxdits moyens de sortie et de réception (134).

27. Procédé selon l'une quelconque des revendications 23 à 26, comprenant en outre les étapes consistant à utiliser une pluralité de modules de modem (52) à l'intérieur de ladite tète de réseau (10), chaque module de modem modulant des informations téléphoniques aval dans une largeur de bande séparée à l'intérieur de ladite première largeur de bande pour produire des signaux de données téléphoniques aval et chaque module de modem démodulant des signaux de données amont reçu.

28. Procédé selon l'une quelconque des revendications 23 à 27, dans lequel ladite tête de réseau (10) convertit les signaux de données optiques amont reçus en signaux de données électriques amont correspondants et divise les signaux de données électriques amont de façon à séparer les signaux de données électriques amont reçus de la pluralité de systèmes de distribution par câble coaxial (29), et dans lequel la tète de réseau (10) effectue en outre l'étape consistant à décaler la largeur de bande des signaux de données électriques amont dont la largeur de bande a été décalée dans ladite unité de conversion optique/ électrique (26) de nouveau à ladite deuxième largeur de bande.

29. Procédé selon la revendication 28 dans la mesure où elle dépend de la revendication 27, dans lequel ladite tête de réseau (10) fournit un signal respectif parmi lesdits signaux de données amont divisés au démodulateur d'un module respectif desdits au moins deux modules de modem (52).

30. Procédé selon la revendication 27 ou 28 dans la mesure où elle dépend de la revendication 27, comprenant en outre l'étape consistant à transférer l'ensemble des signaux de données électriques amont reçus à chaque démodulateur, et dans lequel ladite tète de réseau (10) effectue l'étape consistant à affecter une fréquence de porteuse pour chaque module de modem en fonction des décalages de fréquence appliqués aux signaux de données amont respectifs par ladite unité de conversion optique/ électrique (26), de sorte que chaque démodulateur démodule un signal respectif parmi les signaux de données amont provenant de ladite pluralité de systèmes de distribution par câble coaxial (29).

31. Procédé selon la revendication 27 ou selon l'une quelconque des revendications dépendante de cette revendication, dans lequel ladite tête de réseau (10) comprend au moins un module de protection (54) et un contrôleur (60) et dans lequel le procédé comprend en outre l'étape consistant à substituer ledit au moins un module de protection (54) à l'un desdits modules de modem (52) quand une défaillance est détectée dans ledit un module desdits modules de modem (52).

32. Procédé selon l'une quelconque des revendications 23 à 31, dans lequel au moins l'une desdites unités de service comprend une unité de service multi-utilisateur (44), et dans lequel le procédé comprend en outre l'étape consistant à fournir des informations téléphoniques à une certaine pluralité desdites unités distantes (42) utilisant ladite unité de service multi-utilisateur (44).

33. Procédé selon la revendication 32, comprenant en outre l'étape consistant à fournir des signaux de données vidéo aval à une unité quelconque parmi ladite certaine pluralité d'unités distantes par l'intermédiaire d'une ligne coaxiale séparée.

34. Procédé selon l'une quelconque des revendications 23 à 33, dans lequel ladite largeur de bande prédéterminée inclut ladite deuxième largeur de bande.
